# EUROPEAN PATENT SPECIFICATION

(11) **EP 3 841 840 B1**
(45) Date of publication and mention of the grant of the patent: **16.08.2023**
(21) Application number: 19863126.9
(22) Date of filing: 13.09.2019
(51) Int. Cl.: H05B 3/00, A23L 3/00, A23B 4/01, A47J 37/04

(54) **AN ELECTRO HEATING APPARATUS DEVELOPED I N ORDER TO COOK DONER KEBAB**
ZUM KOCHEN VON DÖNER KEBAB ENTWICKELTE ELEKTROHEIZVORRICHTUNG
APPAREIL DE CHAUFFAGE ÉLECTRIQUE DÉVELOPPÉ POUR CUIRE UN DONER KEBAB

(30) Priority: 17.09.2018 TR 201813291
(43) Date of publication of application: 30.06.2021
(73) Proprietor: Ege Universitesi Rektorlugu, 35100 Izmir (TR)
(72) Inventor: ICIER, Filiz, Izmir (TR); BAKIRCI, Ergun, Bayrakl /Izmir (TR); YILDIZ, Hasan, Manisa (TR); ÇOKGEZME, Ömer Faruk, Izmir (TR); ÇAGATAY, Tuncay, Izmir (TR)
(74) Representative: Yalçiner Patent and Consulting Ltd.
(86) International application number: PCT/TR2019/050757
(87) International publication number: WO 2020/060518

(56) References cited:
- EP-A1- 1 952 737
- DE-A1- 3 720 042
- US-A- 2 200 406
- US-A- 4 612 199
- US-A1- 2010 326 982
- US-A1- 2014 287 112

## Description

### TECH N I CAL FI ELD

The invention is related to an electro-heating apparatus which enables to rapidly and safely produce döner (Turkish doner kebab), without changing its quality.

### PRIOR ART

Doner is a traditional meat product of Turkey. In the food sector, döner, can be presented for sale as a semi-cooked/cooked processed food in businesses and it can also be sold in restaurants to consumers by cooking it before serving it to customers.

Generally, the surface of the döner is heated by means of heat transfer applied over the surface of the döner, the heat transfer is transferred into the inner portions of the döner via a transmission mechanism. In this type of heating method, if excess energy is applied onto the surface a roasted layer is formed due to heat accumulation on the surface, however the sections inside the döner starting from below the surface remain uncooked. Therefore both cooked and uncooked meat pieces can be present at the sections of meat cut with a knife.

As it is known, meat is a food product that needs to be given special importance in terms of food safety. Meat can comprise microorganisms that are hazardous to human health. Before consuming the meat, it is necessary to heat the meat to an effective temperature (70-75 ° C, etc.) in order to inactivate some harmful microorganisms and to reduce the number of microorganisms before consumption of said meat. This cooking process must be provided homogenously for all meats. It is mandatory for all sections of the meat product purchased as a portion before consumption to reach a critical temperature, in other means it is mandatory for the meat to be cooked.

For this reason, it is important for all sections of the meat such as döner that is served as a portion to reach the desired cooking temperature.

In the food sector, the heat energy provided in procedures where surface heating applied needs to be adjusted precisely. If low energy is applied, only the surface will be affected, and this will not allow the sections below the surface to be cooked. If high energy is applied the surface will be burnt and therefore it will lead to the formation of toxic compounds that are hazardous for human health. Due to this reason, the heat energy must be such that it can cook both the surface and the section below the surface, so that when the cutting process is continued the meat is continuously cooked. It is quite difficult to provide this condition practically.

In the presently applied döner cooking systems, it is aimed to solve this problem by controlling temperatures during production at operating conditions and by using automatic cutting tools. However in such a case the process time is slow and it takes a long time for high volume döner rolls to be cooked. The heat is transferred towards the inner sections of the döner roll onto which heat is continuously applied on the surface of the döner, however this energy is not sufficient to provide cooking. For this reason, microbiological problems arise regarding the döner which is a meat product that is open to microbial growth. More microorganisms need to be inactivated during the cooking process of döners subjected to such a condition. This means that the present cooking criteria will not be adequate. This is a situation needs to be determined with control by experts.

Some businesses process döner by freezing it and they try to prevent the döner from being spoilt during the cooking process that takes a long time. In such a case the cooking of the frozen product needs higher energy to be used.

The personnel that cook the döner in restaurants that carry out this cooking process before serving to the consumer need to be specialized in their field. However, it is a problem to find people who can apply the cooking process by meeting the above mentioned cooking criteria of the döner which is widely used for consumption and examining the risks to human health and the factors that affect quality. The high energy applied in order to cook the döner rapidly before serving to the consumer may lead to toxic compounds being formed at the surface section of the döner, for the inner section to remain uncooked and therefore the presentation of a food product that is not safe in terms of microbes. On the other hand this also causes the quality of döner to quickly change and leads to obtaining a low quality product. When low energy is applied a product that is not sufficiently cooked is obtained and this may lead to unsafety in terms of microbes. Providing rapid and homogenous heating on the surfaces of the product during the cooking of döner and other similar meat products is an important issue. The application efficiency of the user during traditional cooking, directly affects the quality of the cooked product. Various systems have been developed in order to solve this problem. Studies where the surface temperature of the product is automatically controlled and/or where heat source controllable systems are used are available among the developed systems. Systems such as electric resistances, quartz, ceramic etc., lamps, microwave, infrared, ohmic heating, induction heating etc., are used as controllable heat sources.

### BRI EF DESCRI PTI ON OF THE I NVENTI ON

The present invention is related to an electro heating apparatus developed for cooking döner in order to eliminate the disadvantages mentioned above and to provide new advantages to the related technical field.

The invention relates to the usage of a new method in order to cook döner which is widely used in the food sector. The electro-heating method is used in order to rapidly cook döner in order to provide food safety prior to the commonly used surface roasting method applied onto the section of the döner that is to be consumed. The invention allows rapid and homogenous cooking by applying heat to the desired section of döner and enables to meet the cooking criteria required in terms of food safety. As a result the application of moderate heat during roasting should also be enough to complete the traditional cooking process. During the roasting process, as high thermal energy application is not needed, the risk of formation of toxic compounds that are hazardous to human health is also reduced.

The invention provides food safety in cooking döner which is a stacked meat product and which is unique as it enables to heat the desired section of the döner by passing electric current through it, in order to accelerate the cooking process. The invention is also unique in that it applies electric current via the electrodes that are formed of nested rings that are in contact with the surface of the döner, and that have been positioned on both the opposite surfaces of the döner and in that döner is used as the resistance which completes the circuit. The heating can be conducted in a rapid and homogenous manner by means of the apparatus that has been developed.

The aim of the invention is to provide electric current to the electrodes by enabling perfect contact of the electrodes to the döner, that are to be placed on both the opposite surfaces of the döner, and to use the döner placed between the electrodes as resistance.

Another aim of the invention allows a cooking process application which can meet sufficient cooking criteria of the desired sections of the döner. Another aim of the invention is to provide heating to the desired sections of the döner by using nested ring shaped electrodes. Another aim of the invention is to provide sectional cooking starting from the side surfaces of the döner towards the centre of the döner in a controlled manner.

The invention is an electro heating apparatus according to claim 1.

According to a preferred embodiment of the invention the electrodes that allow the döner meat to be cooked are made of electric conducting materials.

According to another preferred embodiment of the invention, the electrodes located at the top and the bottom are either fixed or mobile.

According to another preferred embodiment of the invention, the electrodes are configured to enable to cook the döner gradually starting from the outer section towards the inner section.

### BRI EF DESCRI PTI ON OF THE Fl GURES

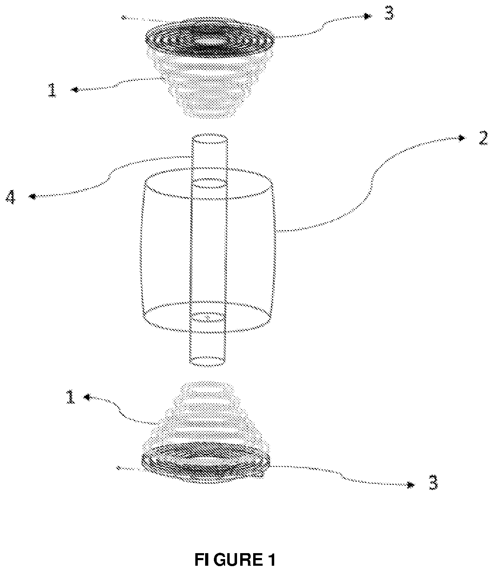

Figure 1 shows an electro heating apparatus developed in order to cook döner.

### REFERENCE NUMBERS

- 1: Electrodes
- 2: Döner (Gyro)
- 3: Connection Cables
- 4: Insulating Support

### DETAI LED DESCRI PTI ON OF THE I NVENTI ON

The novelty of the invention has been described with examples that shall not limit the scope of the invention and which have been intended to only clarify the subject matter of the invention. The invention is related to an electro heating apparatus that has been developed in order to cook döner (2).

The invention solves the problem of having uncooked meat sections by applying, starting from the surface before the cooking process; a rapid and homogenous cooking process having the desired thickness. As a result it will be sufficient for the cooking process to be applied to be moderate and burning of the surface sections will be prevented. Therefore, it is possible to cook a döner product that is safe in terms of microbes, that is high quality and has low toxic compound formation risk.

The invention allows a cooking process application which can meet sufficient cooking criteria of the desired sections of the döner (2). As opposed to only surface heating provided in the prior art a system, the invention allows homogenous cooking of the surface and the sections close to the surface before the roasting process. As a result before applying a roasting process onto the surface, the surface sections that are to be served for consumption and the sections under the surface can be cooked rapidly and homogenously at desired thickness.

The electro-heating method is based on the principle of heating/cooking of the meat by submitting an electric current through the desired section of the döner and creating heat generation in this desired section. The electro-heating method is used to provide processes such as heating, cooking, pasteurizing, sterilizing, boiling food stuffs, creating enzyme inactivation, microbial inactivation, evaporation, extraction etc. When electro heating is compared with traditional heating methods, it is known that it maintains and improves the quality of food stuff better, or that it does not alter the quality of food stuff.

As opposed to the present heating systems, in this invention cooking is provided at the desired sections and levels rapidly by applying a different electrode configuration to ohmic heated meat products such as döner. The cooking process is carried out sectionally, from the side surfaces of the döner towards the centre of the döner in a controlled manner.

Homogenous heat generation and therefore homogenous heating is performed depending on the electric current passing through the döner (2). The homogenous passage of electric current through the döner, depends on perfect contact of the electrodes with the food stuff. The aim of the invention is to provide electric current to the electrodes by enabling perfect contact of the electrodes (1) to the döner (2) that are to be placed on both the opposite surfaces of the döner, and to use the döner placed between the electrodes (1) as resistance. The difference of this invention in comparison to the present heating applications is that heating is provided to the desired sections of the döner by using nested ring-shaped electrodes (1). The electro-heating method provides an apparatus which allows cooking of the desired section of döner (2).

Said invention is formed of a system which enables to cook döner depending on the principle of transferring electricity at a suitable voltage to the döner (2) meat that has been placed on an insulating support (4) via connection cables (3) that are connected to the electrodes (1) that are placed on the top and bottom surface of the döner such as to be in contact with the döner.

The electrodes (1) can be in any number and geometrical shape that are suitable to the shape and size of the döner (2) meat. Electrodes (1) enable to cook the döner (2) meat gradually by ohmic method, starting from the surface of the meat. Electric current is provided to the opposite electrodes (1) placed on the outermost bottom and top sections of the meat such as to be in contact with the surface of the döner (2) meat. When the electrodes (1) are not in contact with döner (2) meat, current is shut off from these electrodes (1) and it is provided to the inner electrodes. The electro cooking process has been designed to provide cooking from the outer section towards the inner section, gradually. Electrodes (1) provide gradual ohmic cooking by starting to cook from the outer section of the döner (2) meat towards the inner section. Electrodes (1) that enable to cook the döner (2) meat are made of electric conductive materials. The electrodes (1) located at the top and the bottom is either fixed or mobile.

## Claims

1. An electro heating apparatus configured to cook döner (2) kebab, the apparatus comprising; an insulating support (4) onto which the shaped döner (2) meat can be stacked on; electrodes; and connection cables (3) which provide suitable voltage to be given to the electrodes (1), the apparatus being **characterized in that** the electrodes are two nested ring-shaped electrodes (1) suitable to be placed on opposite top and bottom surfaces of the döner meat to enable to heat the desired section of the döner (2) meat, wherein each of the nested ringshaped electrodes comprises an outermost electrode and inner electrodes, the outermost electrodes being configured to be located on the opposite outermost bottom and top sections of the döner meat (2) and the inner electrodes being configured to be located on opposite inner bottom and top sections of the döner meat, and wherein the apparatus is configured to provide a current to the outermost electrodes located on the opposite outermost bottom and top sections when they are in contact with said döner meat, and to cut off the current from the outermost electrodes located on the opposite outermost bottom and top sections and allow a current to pass through the inner opposite electrodes when the outermost electrodes located on the opposite outermost bottom and top sections no longer contact the döner (2) meat allowing gradual cooking of the döner (2) meat with an ohmic method starting from the surface of said meat.

2. An electro heating apparatus according to claim 1, **characterized in that** the electrodes (1) located at the top and the bottom are either fixed or mobile.

3. An electro heating apparatus according to claim 1, **characterized in that** the electrodes (1) are configured to enable to cook the döner gradually starting from the outer section towards the inner section.

4. An electro heating apparatus according to claim 1, **characterized in that** the electrodes (1) that allow the döner (2) meat to be cooked are made of electric conductive materials.

## Patentansprüche

1. Elektroheizvorrichtung, die zum Kochen von Döner (2) Kebab konfiguriert ist, wobei die Vorrichtung umfasst, einen isolierenden Träger (4), auf den das geformte Fleisch des Döners (2) gestapelt werden kann; Elektroden, und Verbindungskabel (3), die eine geeignete Spannung bereitstellen, die an die Elektroden (1) angelegt wird, die Vorrichtung **dadurch gekennzeichnet ist, dass** die Elektroden zwei ineinander geschachtelte, ringförmige Elektroden (1) sind, die geeignet sind, auf gegenüberliegenden Ober- und Unterseiten des Fleisches des Döners platziert zu werden, um zu ermöglichen, den gewünschten Abschnitt des Fleisches des Döners (2) zu erhitzen, wobei jede der verschachtelten ringförmigen Elektroden eine äußerste Elektrode und innere Elektroden umfasst, wobei die äußersten Elektroden so konfiguriert sind, dass sie sich auf den gegenüberliegenden äußersten unteren und oberen Abschnitten des Dönerfleisches (2) befinden, und die inneren Elektroden so konfiguriert sind, dass sie sich auf gegenüberliegenden inneren unteren und oberen Abschnitten des Fleisches des Döners befinden, und wobei die Vorrichtung so konfiguriert ist, dass sie den äußersten Elektroden, die sich an den gegenüberliegenden äußersten unteren und oberen Abschnitten befinden, einen Strom zuführt, wenn sie mit dem genannten Fleisch des Döners in Kontakt sind, und dass sie den Strom von den äußersten Elektroden, die sich an den gegenüberliegenden äußersten unteren und oberen Abschnitten befinden, unterbricht und einen Strom durch die inneren gegenüberliegenden Elektroden fließen lässt, wenn die äußersten Elektroden, die sich an den gegenüberliegenden äußersten unteren und oberen Abschnitten befinden, nicht mehr mit dem Fleisch des Döners (2) in Kontakt sind, was ein allmähliches Garen des Fleisches des Döners (2) mit einem ohmschen Verfahren ermöglicht, das von der Oberfläche des genannten Fleisches ausgeht.

2. Elektroheizvorrichtung nach Anspruch 1, **dadurch gekennzeichnet, dass** die oben und unten angeordneten Elektroden (1) entweder fest oder beweglich sind.

3. Elektroheizvorrichtung nach Anspruch 1, **dadurch gekennzeichnet, dass** die Elektroden (1) so konfiguriert sind, dass sie das allmähliche Garen des Döners vom äußeren Abschnitt zum inneren Abschnitt hin ermöglichen.

4. Elektroheizvorrichtung nach Anspruch 1, **dadurch gekennzeichnet, dass** die Elektroden (1), die das Garen des Fleisches des Döners (2) ermöglichen, aus elektrisch leitfähigen Materialien hergestellt sind.

## Revendications

1. Appareil d'électro-chauffage configuré pour cuire un döner (2) kebab, l'appareil comprenant : un support isolant (4) sur lequel la viande de döner (2) façonnée peut être empilée ; des électrodes ; et des câbles de connexion (3) qui fournissent une tension appropriée aux électrodes (1), l'appareil étant **caractérisé en ce que** les électrodes sont deux électrodes imbriquées en forme d'anneau (1) appropriées pour être placées sur les surfaces supérieure et inférieure opposées de la viande de döner pour permettre de chauffer la section souhaitée de la viande de döner (2), dans lequel chacune des électrodes imbriquées en forme d'anneau comprend une électrode plus externe et des électrodes plus internes, les électrodes plus externes étant configurées pour être situées sur les parties inférieure et supérieure plus externes opposées de la viande de döner (2) et les électrodes plus internes étant configurées pour être situées sur les parties inférieure et supérieure plus internes opposées de la viande de döner, et dans lequel l'appareil est configuré pour fournir un courant aux électrodes plus externes situées sur les sections inférieures et supérieures plus externes opposées lorsqu'elles sont en contact avec ladite viande de döner, et pour couper le courant des électrodes plus externes situées sur les sections inférieures et supérieures plus externes opposées et permettre à un courant de passer à travers les électrodes intérieures opposées lorsque les électrodes plus externes situées sur les sections inférieures et supérieures plus externes opposées ne sont plus en contact avec la viande de döner (2), ce qui permet une cuisson progressive de la viande de döner (2) avec une méthode ohmique à partir de la surface de ladite viande.

2. Appareil d'électro-chauffage selon la revendication 1, **caractérisé en ce que** les électrodes (1) situées en haut et en bas sont soit fixes, soit mobiles.

3. Appareil d'électro-chauffage selon la revendication 1, **caractérisé en ce que** les électrodes (1) sont configurées pour permettre de cuire le döner progressivement à partir de la section extérieure vers la section intérieure.

4. Appareil d'électro-chauffage selon la revendication 1, **caractérisé en ce que** les électrodes (1) qui permettent de cuire la viande de döner (2) sont constituées de matériaux conducteurs d'électricité.
